# FASCICULE DE BREVET EUROPEEN

(11) **EP 2 529 431 B1**
(45) Date de publication et mention de la délivrance du brevet: **22.08.2018**
(21) Numéro de dépôt: 11736573.4
(22) Date de dépôt: 28.01.2011
(51) Int. Cl.: H01M 4/58, H01M 4/136, H01M 10/052, C01B 25/45, H01M 4/62, H01M 10/0565, H01M 4/131, C01B 25/37

(54) **PROCÉDÉ D'OPTIMISATION D'UN MATÉRIAU DE CATHODE ET MATÉRIAU DE CATHODE AYANT DES PROPRIÉTÉS ÉLECTROCHIMIQUES AMÉLIORÉES**
VERFAHREN ZUR OPTIMIERUNG EINES KATHODENMATERIALS UND KATHODENMATERIAL MIT ERWEITERTEN ELEKTROCHEMISCHEN EIGENSCHAFTEN
METHOD FOR OPTIMIZING A CATHODE MATERIAL AND CATHODE MATERIAL HAVING ENHANCED ELECTROCHEMICAL PROPERTIES

(30) Priorité: 28.01.2010 CA 2691265
(43) Date de publication de la demande: 05.12.2012
(73) Titulaire: Bathium Canada Inc., Boucherville, QC J4B 7Z7 (CA)
(72) Inventeur: GEOFFROY, Denis, Verdun, H4G 3M5 Québec (CA); LIANG, Guoxian, St-Hyacinthe, Québec J2R 2C4 (CA); GAUTHIER, Michel, La Prairie, Québec J5R 1E6 (CA); LAHRS, Thorsten, 61118 Bad Vilbel (DE); RAVET, Nathalie, Montréal, Québec H2J 3J6 (CA); PARENT, Michel, St-Jean-sur-Richelieu, Quebec J3B 8T6 (CA); VALLÉE, Alain, Varennes, Québec, J3X 2A2 (CA); LEBLANC, Patrick, Boucherville, Québec, J4B 8K (CA); COTTON, Frederic, Montréal, Québec, H2A 3K% (CA)
(74) Mandataire: Stolmár & Partner Patentanwälte PartG mbB
(86) Numéro de dépôt international: PCT/CA2011/000108
(87) Numéro de publication internationale: WO 2011/091525

(56) Documents cités:
- EP-A2- 1 049 182
- WO-A1-02/27823
- WO-A1-02/27823
- CA-A1- 2 667 602
- JP-A- 2003 292 307
- JP-A- 2005 047 751
- JP-A- 2005 050 684
- JULIEN C M ET AL: "Nanoscopic scale studies of LiFePO4 as cathode material in lithium-ion batteries for HEV application", IONICS, KIEL, DE, vol. 13, no. 6, 7 août 2007 (2007-08-07), pages 395-411, XP002603785, ISSN: 0947-7047, DOI: 10.1007/S11581-007-0149-0 [extrait le 2007-08-07]

## Description

Cette demande revendique le bénéfice de priorité de la demande canadienne 2,691,265, déposée le 28 janvier 2010.

### 1. Domaine de l'invention

La présente invention concerne un procédé d'optimisation d'un matériau de cathode qui présente ainsi des propriétés électrochimiques améliorées. La présente invention concerne également un matériau qui présente des propriétés électrochimiques améliorées.

### 2. Description de l'art antérieur

Dans les accumulateurs de type lithium-ion, le composé d'intercalation LiCoO₂ présente de très bonnes propriétés électrochimiques. Cependant, la quantité limitée, le prix du cobalt et les problèmes de sécurité freinent la généralisation de tels accumulateurs lithium-ion dans des applications nécessitant des capacités de stockage élevées. Il a été proposé de remplacer les oxydes de lithium et de métal de transition par des matériaux ayant une structure isotype de l'olivine, plus particulièrement de type LiMPO₄, où M peut être un métal tel que le fer (Cf. US 5,910,382 et US 6,514,640). Les problèmes de sécurité sont ainsi résolus, grâce à la liaison covalente P-O qui stabilise la cathode totalement chargée par rapport à la libération d'oxygène.

Certains matériaux, tel que le LiFePO₄, présentent une cinétique non optimale, induite par la faible conductivité électronique intrinsèque, qui résulte du fait que les polyanions PO₄ sont liés de manière covalente. Cependant, l'utilisation d'une fine couche de carbone pyrolytique à la surface de tels matériaux (comme décrit dans EP 1049182, CA 2,307,119, US 6,855,273, US 6,962,666, US 7,344,659, US 7,457,018, WO 02/27823 & WO 02/27824) a permis de développer et de commercialiser un produit phosphate portant un dépôt de carbone pyrolytique conducteur électronique (par exemple le C-LiFePO₄) de grade batterie qui a une capacité élevée et qui peut fournir une puissance élevée. Dans le cas spécifique du phosphate de lithium et de fer, ce matériau peut en outre être modifié par remplacement partiel des cations Fe par des cations métalliques isovalents ou aliovalent, tels que par exemple et sans limitation, Mn, Ni, Co, Mg, Mo, Nb, Ti, Al, Ta, Ge, La, Y, Yb, Sm, B, Ce, Hf, Cr, Zr, Bi, Zn, Ca et W, ou par remplacement partiel de l'oxyanion PO₄ par SiO₄, SO₄ ou MoO₄ (comme décrit dans US 6,514,640).

Dans le cas spécifique du C-LiFePO₄, le potentiel de la cathode C-LiFePO₄ de 3,5 V vs Li⁺/Li⁰ en fait aussi un candidat idéal pour les batteries de technologie lithium métal polymère (LMP) utilisant une anode de lithium métallique, en remplacement des oxydes de vanadium. Ces batteries utilisent en effet comme électrolyte conducteur ionique un polymère sec de la famille des polyéthers dans lequel est dissous un sel de lithium, dont la fenêtre de stabilité électrochimique est de l'ordre de 4 V vs Li⁺/Li⁰. L'utilisation du C-LiFePO₄ permet de concevoir des batteries LMP pour les véhicules électriques présentant d'excellentes performances en cyclage et une sécurité améliorée.

Les références JP 2005 050684 A, JP 2005 047751 A et JULIEN C. M. ET AL: "Nanoscopic scale studies of LiFePO4 as cathode material in lithium-ion batteries for HEV application", IONICS, KIEL, DE, vol. 13, no. 6, 1 décembre 2007 (2007-12-01), pages 395-411, ISSN: 0947-7047, DOI: 10.1007/S11581-007-0149-0, constituent également des documents de l'art antérieur.

### Résumé de l'invention

Il est apparu que certains lots de matériau oxyanion de métal lithié ou partiellement lithié comportant un dépôt de carbone pyrolytique à leur surface (notamment dans le cas où le matériau est le C-LiFePO₄) posaient des problèmes spécifiques lorsque utilisés comme cathode, par exemple dans le cas spécifique d'une batterie LMP, notamment dans leurs propriétés électrochimiques. Ces problèmes ont été notamment identifiés en premier lieu par l'accroissement de l'impédance spécifique de surface (dénommée « ASI » à partir de la terminologie anglaise « Area Specific Impedance ») des batteries, cette augmentation étant préjudiciable aux performances de la batterie.

Ces problèmes spécifiques ont conduit les inventeurs à initier un programme de R&D permettant d'identifier et de solutionner ce problème. Suite à de nombreuses expériences avec différents lots du matériau illustratif et non-limitatif C-LiFePO₄, les inventeurs ont remarqués que, de façon surprenante, l'augmentation de l'ASI des batteries LMP était corrélée à la présence de faibles taux d'impuretés contenant du calcium. Aucun document de l'art antérieur n'enseigne ni ne suggère l'effet négatif des impuretés contenant du calcium sur l'ASI des batteries LMP. La présente invention est définie dans les revendications. Dans un mode de réalisation, le procédé défini dans les revendications peut comprendre, durant la synthèse des matériaux et (ou) durant des étapes de lavages, l'utilisation d'une eau qui est peu ou pas calcaire afin que dans le produit C-AₓM(XO₄)_{y} la teneur en calcium présent comme impureté soit inférieure à 1000 ppm, préférentiellement inférieure à environ 500 ppm, plus préférablement inférieure à environ 300 ppm, plus particulièrement inférieure à environ 100 ppm.

Dans un mode de réalisation, le film de carbone est un dépôt uniforme, adhérent et non poudreux. Il représente environ de 0,03 à environ 15% en poids, de préférence environ de 0,5 à environ 5% en poids par rapport au poids total du matériau. Dans un mode de réalisation, le matériau de la présente invention, lorsqu'utilisé comme matériau de cathode, présente au moins un plateau de décharge/charge à environ 3,4-3,5 V vs Li⁺/Li⁰, caractéristique du couple Fe⁺²/Fe⁺³.

Dans un autre aspect non-limitatif, la présente invention vise un matériau MPO₄, éventuellement hydraté, pour la synthèse de C-LiMPO₄ par un procédé thermique, où le matériau a une teneur en calcium présent comme impureté inférieure à 1000 ppm, M est un métal représentant au moins 70% atomique de Fe(II). Dans un mode de réalisation, le matériau MPO₄ pour la synthèse de C-LiMPO₄ par un procédé thermique, est caractérisé par une teneur en calcium présent comme impureté inférieure à environ 500 ppm, préférablement inférieure à environ 300 ppm, plus particulièrement inférieure à environ 100 ppm.

Dans un autre aspect non-limitatif, l'impureté comprenant du calcium est essentiellement présente à la surface du matériau MPO₄.

Dans un mode spécifique de réalisation, M représente Fe(II), le matériau FePO₄, éventuellement hydraté, pour la synthèse de C-LiFePO₄ par un procédé thermique, est caractérisé par une teneur en calcium présent comme impureté inférieure à 1000 ppm, préférentiellement inférieure à environ 500 ppm, préférablement inférieure à environ 300 ppm, plus particulièrement inférieure à environ 100 ppm.

Dans un autre aspect non-limitatif, l'impureté comprenant du calcium est essentiellement présente à la surface du matériau FePO₄.

Ces aspects et d'autres caractéristiques de la présente invention seront maintenant rendus évidents pour l'homme du métier à la révision de la description suivante de modes particuliers de réalisation de l'invention.

### Description de l'invention

Suite à de nombreuses expériences, les inventeurs ont remarqués que, de façon surprenante, l'augmentation de l'ASI des batteries LMP était corrélée à la présence d'impuretés contenant du calcium.

Dans une mise en oeuvre non-limitative de ce concept, les inventeurs ont utilisé du C-LiFePO₄ synthétisé par un procédé thermique à l'état solide. Ce procédé thermique à l'état solide consiste à mélanger des sources de Li, Fe et PO₄ avec un composé organique. Plus précisément, du carbonate de lithium (Li₂CO₃), du phosphate de fer (FePO₄) et un polymère sont mixés, puis ce mélange cuit sous atmosphère réductrice dans un four rotatif à la sortie duquel est obtenu le matériau de cathode C-LiFePO₄. Dans cet exemple spécifique, les inventeurs ont corrélé l'origine du calcium présent comme impureté à la matière première FePO₄, pouvant contenir des impuretés à base de calcium, en particulier des phosphates ou carbonates de calcium peu solubles en milieu aqueux. Ces impuretés comprenant du calcium se retrouvent *in fine* dans le produit C-LiFePO₄.

Dans cette mise en oeuvre non-limitative, les inventeurs ont observé une augmentation de l'ASI au cours du cyclage de batteries LMP avec des lots de C-LiFePO₄ ne contenant que de très faibles quantités de calcium présent comme impureté, soit quelques centaines de ppm telles que déterminées par microanalyses chimiques (torche à plasma, etc.). On peut avancer des explications à cet effet surprenant sans que cela ne soit une limite à l'invention. Lors de la fabrication de certains lots de FePO₄, il est possible que l'utilisation d'une eau calcaire durant la synthèse et/ou des étapes de lavages conduise au dépôt de sels de calcium peu solubles dans l'eau, en particulier des carbonates et des phosphates (par exemple CaHPO₄, Ca₃(PO₄)₂, CaCO₃, etc.), à la surface du FePO₄ utilisé comme matière première pour la synthèse du produit C-LiFePO₄. On peut supposer que ce calcium présent comme impureté se retrouve tout ou en partie à la surface du C-LiFePO₄, par exemple, mais sans limitation, sous la forme d'un phosphate de calcium, lithié ou non. L'analyse XPS de la surface de C-LiFePO₄ contenant du calcium présent comme impureté a confirmé sa présence à la surface du matériau.

L'observation des effets néfastes de la présence de calcium présent comme impureté dans la technologie LMP peut s'expliquer par la très forte viscosité de l'électrolyte, contrairement à un électrolyte liquide, entraînant la formation d'une interface limitant les transferts ioniques entre l'électrolyte et la cathode. De plus, l'électrolyte polymère à base de polyéthers ayant un fort pouvoir solvatant, on peut supposer, sans que cela ne soit une limite à l'invention, que les impuretés à base de calcium interagissent ou sont au moins partiellement solubilisées par celui-ci. Cet effet peut être renforcé par le sel de lithium du bis(trifluorométhanesulfonyl)imide (dénommé « LiTFSI ») couramment utilisé pour les électrolytes des batteries LMP, en effet l'anion TFSI est capable d'emmener en solution de nombreux cations, incluant les cations divalents comme le calcium. Un électrolyte polymère n'est conducteur que s'il présente une structure amorphe, c'est-à-dire désorganisée, structure la plus apte à dissocier et à solvater le sel. Toute amorce de cristallisation fait augmenter l'énergie de cohésion du polymère et a des conséquences néfastes sur la conductivité ionique du matériau. Une telle structure amorphe n'est obtenue qu'en se plaçant à une température supérieure à la température de transition vitreuse T_{g} qui doit donc être la plus basse possible. La valeur de T_{g} peut évoluer en fonction de la quantité de sel solvaté dans le polymère, et également suivant la nature du cation pour un anion donné. Une impureté contenant du calcium divalent présente à la surface du matériau C-AₓM(XO₄)_{y} peut ainsi augmenter localement à l'interface avec l'électrolyte la température de transition vitreuse de l'électrolyte, voir former des composés définis microcristallins à haut point de fusion, ce qui se traduit par un accroissement des résistances d'interfaces et donc de l'ASI.

C'est pourquoi, dans un mode de réalisation particulier, le procédé de l'invention comprend, durant la synthèse des matériaux et (ou) durant des étapes de lavages, l'utilisation d'une eau qui est peu ou pas calcaire afin que dans le produit C-AₓM(XO₄)_{y} la teneur en calcium présent comme impureté soit inférieure à 1000 ppm, préférentiellement inférieure à environ 500 ppm, plus préférablement inférieure à environ 300 ppm, plus particulièrement inférieure à environ 100 ppm. L'homme du métier sera en mesure d'obtenir une eau qui est peu ou pas calcaire sans effort anormal.

Le but des nombreuses expériences rapportées ici était donc d'identifier les causes de la dégradation inattendue des performances de batteries utilisant des lots de C-LiFePO₄ à priori similaire et d'identifier une composition optimisée pour les batteries de technologie lithium métal polymère contenant le matériau C-AₓM(XO₄)_{y}. Le matériau de la présente invention, désigné dans ce mémoire descriptif par "matériau C-AₓM(XO₄)_{y}", est constitué par des particules d'un composé répondant à la formule AₓM(XO₄)_{y} qui ont une structure olivine et qui portent sur au moins une partie de leur surface un dépôt de carbone déposé par pyrolyse, où :
- A représente Li, seul ou partiellement remplacé par au plus 10% atomique de Na ou K;
- M représente Fe(II), ou Mn(II), ou leurs mélanges, seul ou partiellement remplacé par au plus 30% atomique d'un ou plusieurs autres métaux choisis parmi Ni et Co, et/ou par au plus 10% atomique d'un ou plusieurs métaux aliovalents ou isovalents autres que Ni ou Co, et/ou par au plus 5% atomique de Fe(III); et
- XO₄ est un oxyanion et représente PO₄ seul ou partiellement remplacé par au plus 10% molaire d'au moins un groupe choisi parmi SO₄, SiO₄ et MoO₄ ;
- 0 < x ≤ 2 et 0 < y ≤ 2, les coefficients x et y étant choisis indépendamment pour assurer l'électroneutralité de l'oxyde complexe,
le matériau étant caractérisé en ce qu'il a une teneur en calcium présent comme impureté inférieure à 1000 ppm.

Dans un mode de réalisation particulier, le matériau C-AₓM(XO₄)_{y} précédent est caractérisé en ce qu'il a une teneur en calcium présent comme impureté inférieure à environ 500 ppm, de préférence moins de environ 300 ppm, et plus particulièrement inférieure à environ 100 ppm.

Dans un 2^{ème} mode de réalisation particulier, le matériau C-AₓM(XO₄)_{y} de la présente invention est constitué par des particules d'un composé répondant à la formule AₓM(XO₄)_{y} qui ont une structure olivine et qui portent sur au moins une partie de leur surface un dépôt de carbone déposé par pyrolyse, où :
- A représente Li, seul ou partiellement remplacé par au plus 10% atomique de Na ou K;
- M représente Fe(II), seul ou partiellement remplacé par au plus 30% atomique d'un ou plusieurs autres métaux choisis parmi Mn, Ni et Co, et/ou par au plus 10% atomique d'un ou plusieurs métaux aliovalents ou isovalents choisis parmi Mg, Mo, Nb, Ti, Al, Ta, Ge, La, Y, Yb, Sm, Ce, Cu, Hf, Cr, Zr, Bi, Zn, B, Ca et W, et/ou par au plus 5% atomique de Fe(III); et
- XO₄ est un oxyanion et représente PO₄ seul ou partiellement remplacé par au plus 10% molaire d'au moins un groupe choisi parmi SO₄, SiO₄ et MoO₄;
- 0 < x ≤ 2 et 0 < y ≤ 2, les coefficients x et y étant choisis indépendamment pour assurer l'électroneutralité de l'oxyde complexe,
le matériau étant caractérisé en ce qu'il a une teneur en calcium présent comme impureté inférieure à 1000 ppm.

Dans un mode de réalisation particulier, le matériau C-AₓM(XO₄)_{y} précédent est caractérisé en ce qu'il a une teneur en calcium présent comme impureté inférieure à environ 500 ppm, de préférence inférieure à environ 300 ppm, plus particulièrement inférieure à environ 100 ppm.

Dans un 3^{ème} mode de réalisation particulier, le matériau C-AₓM(XO₄)_{y} est C-LiMPO₄ constitué par des particules d'un composé répondant à la formule LiMPO₄ qui a une structure olivine et qui porte sur au moins une partie de sa surface un dépôt de carbone déposé par pyrolyse, M représentant au moins 70% atomique de Fe(II), et caractérisé en ce qu'il a une teneur en calcium présent comme impureté inférieure à 1000 ppm, de préférence inférieure à environ 500 ppm, préférentiellement inférieure à environ 300 ppm, et plus particulièrement inférieure à environ 100 ppm.

Dans un 4^{ème} mode de réalisation particulier, le matériau C-AₓM(XO₄)_{y} est C-LiFePO₄ constitué par des particules d'un composé répondant à la formule LiFePO₄ qui a une structure olivine et qui porte sur au moins une partie de sa surface un dépôt de carbone déposé par pyrolyse, et caractérisé en ce qu'il a une teneur en calcium présent comme impureté inférieure à 1000 ppm, de préférence inférieure à environ 500 ppm, préférentiellement inférieure à environ 300 ppm, et plus particulièrement inférieure à environ 100 ppm.

La teneur en calcium présent comme impureté d'un matériau selon l'invention peut être mesurée à l'aide d'appareillages couramment utilisés dans l'industrie, en particulier les torches à plasma permettant de réaliser des microanalyses chimiques (plasma à couplage inductif, etc.), on peut citer par exemple les spectromètres ICP de la société Horiba Scientific. L'analyse consiste fréquemment en une minéralisation par voie humide, par dissolution acide de l'échantillon, puis la solution obtenue est injectée dans le plasma sous forme d'un aérosol. La teneur des différents éléments est ensuite déterminée grâce à des détecteurs basés sur la spectrométrie d'émission optique ou la spectrométrie de masse.

Les propriétés des matériaux selon l'invention peuvent être adaptées en choisissant de manière appropriée le ou les éléments remplaçant partiellement Fe. Par exemple, dans un matériau dans lequel l'oxyde complexe répond à la formule LiFe_{1-(x+y)}M'ₓM"_{y}PO₄, le choix de M' parmi Mn, Ni et Co permet d'ajuster les potentiels de décharge moyen du matériau de cathode. Le choix de M" parmi, par exemple, Mg, Mo, Nb, Ti, Al, B, Zr, Ca et W peut permettre d'ajuster les propriétés cinétiques du matériau de cathode.

Parmi les matériaux de l'invention, ceux dans lesquels l'oxyde complexe AₓM(XO₄)_{y} répond à la formule LiFe_{1-(x+y)}M'ₓM"_{y}PO₄, avec x+y ≤ 0,3 sont particulièrement préférés.

Dans le cadre de la présente invention, l'expression « particules » englobe aussi bien des particules élémentaires que des agglomérats de particules élémentaires, également dénommés particules secondaires. La dimension des particules élémentaires est de préférence comprise entre 10 nm et 3 µm. La dimension des agglomérats est de préférence comprise entre 100 nm et 30 µm. Ces dimensions de particules et la présence du dépôt de carbone confèrent au matériau une surface spécifique élevée, typiquement entre 5 et 50 m²/g.

Dans un mode particulier de l'invention, le matériau C-AₓM(XO₄)_{y} est composé de particules primaires de tailles microniques, principalement de plus d'environ 1 µm et préférablement entre environ 1 µm et environ 5 µm. La taille des particules secondaires est préférablement entre environ 1 µm et environ 10 µm.

Dans un autre mode particulier de l'invention, le matériau C-AₓM(XO₄)_{y} est composé de particules primaires avec une distribution de tailles de particules D₅₀ comprise entre environ 1 µm et environ 5 µm, et tel que la distribution de taille des particules secondaires D₅₀ est comprise entre environ 1 µm et environ 10 µm.

Dans un autre mode particulier de l'invention, le matériau C-AₓM(XO₄)_{y} est caractérisé en ce que la dimension des particules élémentaires est comprise entre 10 nm et 3 µm et la dimension des agglomérats est comprise entre 100 nm et 30 µm.

Le matériau C-AₓM(XO₄)_{y} peut être préparé par divers procédés, il peut être obtenu par exemple par voie hydrothermale (Cf. WO 05/051840), par voie thermique à l'état solide (Cf. WO 02/027823 et WO 02/027824), ou par voie fondue (Cf. WO 05/062404).

Dans un mode de synthèse préféré du matériau C-AₓM(XO₄)_{y}, la synthèse est mise en oeuvre en faisant réagir par mise en équilibre, thermodynamique ou cinétique, une atmosphère gazeuse avec un mélange dans les proportions requises des composés sources a), b), c) d) et e) suivants :
a) un ou plusieurs composés sources du ou des éléments formant A;
b) une source ou plusieurs sources du ou des éléments formant M;
c) un composé source du ou des éléments X ;
d) un composé source d'oxygène ; et
e) un composé source de carbone conducteur;
la synthèse est effectuée en continu dans un four en contrôlant la composition de l'atmosphère gazeuse, la température de la réaction de synthèse et le taux du composé source c) relativement aux autres composés sources a), b) d) et e), pour imposer l'état d'oxydation du métal de transition au degré de valence voulu pour la constitution du composé de type AₓM(XO₄)_{y} le procédé comportant une étape de pyrolyse du composé e).

Dans ce mode de réalisation, le flux gazeux et le flux de produits solides circulent à contre-courant, dans des conditions optimales, le matériau C-AₓM(XO₄)_{y} récupéré à la sortie du four contient moins de environ 200 ppm d'eau.

Dans un mode de synthèse particulier, le composé source a) est un composé de lithium choisi par exemple dans le groupe constitué par l'oxyde ou l'hydroxyde de lithium, le carbonate de lithium, le phosphate neutre Li₃PO₄, le phosphate acide LiH₂PO₄, l'ortho, le meta ou les poly silicates de lithium, le sulfate de lithium, l'oxalate de lithium et l'acétate de lithium, et un mélange quelconque de ceux-ci. Le composé source b) est un composé du fer choisi par exemple dans le groupe constitué par l'oxyde de fer(III) ou la magnétite, le phosphate de fer trivalent, l'hydroxyphosphate de fer et de lithium ou le nitrate de fer trivalent, le phosphate ferreux, la vivianite hydratée ou non Fe₃(PO₄)₂, l'acétate de fer (CH₃COO)₂Fe, le sulfate de fer (FeSO₄), l'oxalate de fer, le phosphate de fer et d'ammonium (NH₄FePO₄), et un mélange quelconque de ceux-ci. Le composé source c) est un composé du phosphore choisi par exemple dans le groupe constitué par l'acide phosphorique et ses esters, le phosphate neutre Li₃PO₄, le phosphate acide LiH₂PO₄, les phosphates mono- ou di-ammonique, le phosphate de fer trivalent, le phosphate de manganèse et d'ammonium (NH₄MnPO₄). Tous ces composés sont en outre source d'oxygène et certains d'entre eux sont sources d'au moins deux éléments parmi Li, Fe et P. Le dépôt de carbone sur la surface des particules d'oxyde complexe AₓM(XO₄)_{y} est obtenu par pyrolyse d'un composé source e). La pyrolyse du composé e) peut être effectuée en même temps que la réaction de synthèse entre les composés a) à d) pour former le composé AₓM(XO₄)_{y}. Elle peut aussi être effectuée dans une étape consécutive à la réaction de synthèse.

Le dépôt de la couche de carbone conducteur à la surface des particules d'oxyde complexe AₓM(XO₄)_{y} peut être obtenue par décomposition thermique de composés sources e) très variés. Un composé source approprié est un composé qui est à l'état liquide ou à l'état gazeux, un composé qui peut être utilisé sous forme d'une solution dans un solvant liquide, ou un composé qui passe à l'état liquide ou gazeux au cours de sa décomposition thermique, de manière à enrober plus ou moins complètement les particules d'oxyde complexe.

Le composé source e) peut être choisi par exemple dans le groupe constitué par les hydrocarbures liquides, solides ou gazeux, et leurs dérivés (en particulier les espèces polycycliques aromatiques telles que le goudron ou le brai), le pérylène et ses dérivés, les composés polyhydriques (par exemple les sucres et les hydrates de carbone, et leurs dérivés), les polymères, la cellulose, l'amidon et leurs esters et éthers, et un mélange quelconque de ceux-ci. Comme exemple de polymères, on peut citer les polyoléfines, les polybutadiènes, l'alcool polyvinylique, le polyvinyle butyrale, les produits de condensation des phénols (y compris ceux obtenus à partir de réaction avec des aldéhydes), les polymères dérivés de l'alcool furfurylique, du styrène, du divinyl- benzène, du naphtalène, du pérylène, de l'acrylonitrile, et de l'acétate de vinyle.

Lorsque le composé e) est CO ou un hydrocarbure gazeux, il est soumis à une dismutation, avantageusement catalysée par un élément métal de transition présent dans au moins un des précurseurs a) à c), ou par un composé d'un métal de transition ajouté au mélange de précurseurs.

Lorsque le composé source e) est un gaz ou un mélange de gaz tels que l'éthylène, le propylène, l'acétylène, le butane, le 1,3 butadiène, ou le 1-butène, la décomposition thermique est effectuée par craquage dans un four à une température entre environ 100 et environ 1300°C, et plus particulièrement entre environ 400 et environ 1200°C, de préférence en présence d'un gaz porteur inerte. (Cf. par exemple US 2002/195591 et US 2004/157126).

Le dépôt de carbone peut en outre être effectué par CVD à partir d'hydrocarbures, comme décrit dans JP 2006-302671.

Dans un mode de synthèse particulier le matériau C-LiFePO₄ est préparé par un procédé thermique à l'état solide à partir du phosphate de fer (FePO₄), de carbonate de lithium (Li₂CO₃) et d'un composé organique source de carbone.

Un matériau C-AₓM(XO₄)_{y} selon l'invention est particulièrement utile comme cathode dans une batterie de technologie lithium métal polymère (LMP), utilisant une anode de lithium métallique et un électrolyte solide polymère plastifié ou non.

Dans un mode de réalisation particulier, la cathode est constituée de préférence par un matériau composite appliqué sur un collecteur, le matériau composite comprenant C-AₓM(XO₄)_{y}, un polymère solvatant salifié ou non comme liant, de préférence le polymère qui forme le solvant de l'électrolyte, et un matériau favorisant la conduction électronique. Le matériau favorisant la conduction électronique est choisi avantageusement parmi le noir de carbone (Ketjenblack, etc.), le graphite, les fibres de carbone (par exemple sous forme de nanotubes de carbones ou de fibres VGCF (Vapor Grown Carbon Fiber) dont la croissance est effectuée en phase gazeuse, les nanotubes de carbone et le graphene.

Le polymère solvatant est choisi avantageusement parmi les polymères comprenant des segments polyéthers, la dissolution d'un sel de lithium dans ce polymère permettant de préparer un électrolyte polymère solide. Comme exemples de polyéthers utilisables dans le cadre de la présente invention pour former l'électrolyte, on peut citer le poly(oxyde d'éthylène) et les copolymères qui sont obtenus à partir d'oxyde d'éthylène et d'au moins un oxirane substitué, et qui comprennent au moins 60% d'unités récurrentes -CH₂-CH₂O- dérivées de l'oxyde d'éthylène. Les unités récurrentes dérivées d'un oxirane substitué peuvent être des unités -O-CH₂-CHR- (dérivées d'un oxirane CH₂-CHR-O) dans lesquelles R est un radical alkyle, choisi de préférence parmi les radicaux alkyles ayant de 1 à 16 atomes de carbone, plus préférentiellement parmi les radicaux alkyles ayant de 1 à 8 atomes de carbone. Les unités récurrentes dérivées d'un oxirane substitué peuvent en outre être des unités -O-CH₂-CHR'- (dérivées d'un oxirane CH₂-CHR'-O), dans lesquelles R' est un groupement capable de polymériser par voie radicalaire. Un tel groupement peut être choisi parmi ceux qui comportent une double liaison, par exemple un groupe vinyle, allyle, vinylbenzyle ou acryloyle. Comme exemples de tels groupements, on peut citer les groupements qui répondent à la formule CH₂=CH-(CH₂)_{q}-(O-CH₂)ₚ- avec 1 < q < 6 et p = 0 ou 1, ou à la formule CH₃-(CH₂)_{y}-CH=CH-(CH₂)ₓ-(OCH₂)ₚ-, avec 0 < x+y < 5 et p = 0 ou 1. Un polyéther utile pour la présente invention peut comporter des unités récurrentes dérivées de divers oxiranes substitués. Dans un mode de réalisation, le polyéther utilisé selon la présente invention comporte des unités récurrentes dérivées d'au moins un oxirane substitué dans lequel le substituant comprend une fonction polymérisable. À titre d'exemple, on peut citer l'allylglycidyléther.

L'électrolyte polymère peut également être constitué par un mélange de polymères, par exemple sans limitation, par le mélange d'un polymère solvatant et d'un polymère non-solvatant et/ou au moins partiellement soluble dans le polymère solvatant (Cf. FR 2,881,275 et WO 2009/079757).

Dans un mode de réalisation particulier, le sel de lithium peut être choisi notamment parmi LiPF₆, LiAsF₆, LiClO₄, LiBF₄, LiC₄BO₈, Li(C₂F₅SO₂)2N, Li[(C₂F₅)₃PF₃], LiCF₃SO₃, LiCH₃SO₃, LiN(SO₂F) et LiN(SO₂CF₃)₂.

L'électrolyte polymère ainsi formé peut être optionnellement plastifié par au plus 30% en poids d'un solvant liquide, un plastifiant ou un polymère de faible masse.

La capacité de la cathode est couramment exprimée en mg de matière électroactive par cm² de la surface de la cathode.

La cathode est élaborée à partir d'un matériau C-AₓM(XO₄)_{y} de la présente invention ayant une teneur en calcium présent comme impureté inférieure à environ 1000 ppm, de préférence inférieure à environ 500 ppm, préférablement inférieure à environ 300 ppm, plus particulièrement inférieure à environ 100 ppm.

Un matériau C-LiFePO₄ et un matériau C-LiMPO₄ dans lequel M représente au moins 70% atomique de Fe partiellement remplacé par Mn, Nb ou Mg sont particulièrement préférés comme matière active de cathode.

Ce qui précède est considéré comme une illustration des principes de l'invention. En outre, puisque de nombreuses modifications et changements apparaîtront à l'homme du métier, il n'est pas souhaitable de limiter l'invention aux exemples précis et aux réalisations représentés et décrits, et, par conséquent, toutes les modifications appropriées et équivalentes peuvent être invoquées, relevant de la portée de l'invention.

### Exemples

Le procédé selon l'invention a été mis en oeuvre de manière comparative avec les techniques de l'art antérieur, afin de démontrer qu'une très faible teneur en calcium présent comme impureté avait un effet favorable sur les performances du matériau C-AₓM(XO₄)_{y} utilisé comme matériau de cathode dans une batterie de technologie lithium métal polymère.

### Exemple 1 : Synthèse de C-LiFePO₄ par une voie thermique à l'état solide

On a préparé un mélange contenant FePO₄•(H₂O)₂ (1 mole) et Li₂CO₃ (1 mole, taux de pureté : 99,9%), et 5% de polyéthylène-block-poly(éthylène glycol) contenant 50% d'oxyde d'éthylène, on l'a introduit dans de l'alcool isopropylique et on a mélangé pendant environ 10 h, puis on a éliminé le solvant. Dans le matériau ainsi obtenu, le polymère maintient ensemble les particules de phosphate et de carbonate.

On a traité le mélange sous un courant d'azote à 700°C pendant 2 heures, pour obtenir un matériau C-LiFePO₄ de grade batterie, puis on a séché sous vide à 100°C et on a stocké le matériau final en boîte à gant sous atmosphère d'argon à un point de rosée de -90°C. Le matériau a une surface spécifique de 13,4 m²/g et une teneur en carbone de 1,7% en poids.

Cette synthèse a été répétée avec des lots sélectionnés de FePO₄ contenant plus ou moins de calcium comme impureté, le tableau ci-dessous donnant les teneurs en calcium (Ca) déterminés par microanalyses (torche à plasma) dans le produit final C-LiFePO₄.

| **Échantillons C-LiFePO₄** | **Teneur en Ca dans C-LiFePO₄ (ppm)** |
|---|---|
| A | 52 |
| B | 260 |
| C | 1100 |
| D | 3200 |

Ces synthèses ont été répétées avec des lots de FePO₄ dont le Fe(II) est substitué par 5% atomique respectivement de magnésium (Mg) et de manganèse (Mn), et contenant du calcium présent comme impureté. Le tableau ci-dessous donne les teneurs en calcium (Ca) déterminés par microanalyses (torche à plasma) dans les produits finaux C-LiFe_{0.95}Mg_{0.05}PO₄ et C-LiFe_{0.95}Mn_{0.05}PO₄.

| **Échantillons C-LiFe_{0.95}Mg_{0.05}PO₄** | **Teneur en Ca dans C-LiFe_{0.95}Mg_{0.05}PO₄ (ppm)** | **Échantillons C-LiFe_{0.95}Mn_{0.05}PO₄** | **Teneur en Ca dans C-LiFe_{0.95}Mn_{0.05}PO₄ (ppm)** |
|---|---|---|---|
| A-Mg | 45 | A-Mn | 66 |
| B-Mg | 320 | B-Mn | 300 |
| C-Mg | 1200 | C-Mn | 1050 |
| D-Mg | 2950 | D-Mn | 3050 |

### Exemple 2 : Préparation de batteries lithium métal polymère

Dans les différentes batteries assemblées dans cet exemple, les cathodes sont élaborées avec les matériaux de cathodes C-LiFePO₄ obtenus à l'exemple 1. Les batteries LMP ont été préparées selon le mode opératoire suivant. On a mélangé soigneusement pendant 1 heure, 2,06 g de C-LiFePO₄, 1,654 g de poly(oxyde d'éthylène) ayant une masse moléculaire de 100 000 (fourni par Aldrich), et 334 mg de poudre de carbone Ketjenblack (fourni par Akzo-Nobel) dans l'acétonitrile, à l'aide de billes de zircone dans un mélangeur Turbula®. Le mélange obtenu a ensuite été déposé sur une feuille d'aluminium portant un revêtement carboné (fournie par Exopack Advanced Coatings™), à l'aide d'un dispositif Gardner®, le film déposé a été séché sous vide à 80°C pendant 12 heures, puis stocké en boîte à gants. Les cathodes contiennent 4 mg/cm² de C-LiFePO₄.

Des batteries A1, B1, C1 et D1 du type « bouton » ont été assemblées et scellées en boîte à gants pour chaque échantillons A, B, C et D, en utilisant les feuilles d'aluminium carbonées portant le revêtement contenant ces phosphates comme cathode, un film de lithium métallique comme anode et un film de poly(oxyde d'éthylène) contenant 30% en poids de LiTFSI (fourni par la société 3M).

Les batteries A1, B1, C1 et D1 ont été soumises à un cyclage intentiostatique à un régime de C/4 à 80°C entre 2 et 3,8 Volts vs Li⁺/Li^{o}. L'ASI a été déterminée en début de décharge à un régime de C/4 par la méthode couramment utilisée de l'interruption de courant (1 seconde dans le présent cas), et ce au 5^{ème} et au 100^{ème} cycle. Les résultats indiqués (ASI en Ohm.cm²) dans le tableau ci-dessous confirment le rôle néfaste du calcium présent comme impureté dans C-LiFePO₄ utilisé comme cathode d'une batterie de technologie lithium métal polymère.

| **Échantillons C-LiFePO₄** | **ASI 5^{ème} cycle** | **ASI 100^{ème} cycle** |
|---|---|---|
| A | 161 | 164 |
| B | 162 | 195 |
| C | 161 | 302 |
| D | 163 | 604 |

Des batteries A1-Mg, B1-Mg, C1-Mg et D1-Mg et respectivement A1-Mn, B1-Mn, C1-Mn et D1-Mn du type « bouton » ont été assemblées et scellées en boîte à gants pour chaque échantillons A-Mg, B-Mg, C-Mg et D-Mg et respectivement A-Mn, B-Mn, C-Mn et D-Mn, en utilisant les feuilles d'aluminium carbonées portant le revêtement contenant ces phosphates comme cathode, un film de lithium métallique comme anode et un film de poly(oxyde d'éthylène) contenant 30% en poids de LiTFSI (fourni par la société 3M).

Ces batteries ont été caractérisées à l'identique des batteries A1, B1, C1 et D1, on a pu également observer un accroissement similaire de l'ASI en corrélation avec la quantité de calcium présent comme impureté.

## Revendications

1. Batterie comprenant une anode de lithium métallique, une cathode et un électrolyte polymère contenant un sel de lithium, dont la cathode comprend un matériau C-AₓM(XO₄)_{y} constitué par des particules d'un composé répondant à la formule AₓM(XO₄)_{y} où les particules comportent sur au moins une partie de leur surface un dépôt de carbone pyrolytique, où :
- A représente Li, seul ou partiellement remplacé par au plus 10% atomique de Na ou K;
- M représente Fe(II), ou Mn(II), ou leurs mélanges, seul ou partiellement remplacé par au plus 30% atomique d'un ou plusieurs autres métaux choisis parmi Ni et Co, et/ou par au plus 10% atomique d'un ou plusieurs métaux aliovalents ou isovalents autres que Ni ou Co, et/ou par au plus 5% atomique de Fe(III); et
- XO₄ représente PO₄ seul ou partiellement remplacé par au plus 10% molaire d'au moins un groupe choisi parmi SO₄, SiO₄ et MoO₄; et
- 0 < x ≤ 2 et 0 < y ≤ 2, les coefficients x et y étant choisis indépendamment pour assurer l'électroneutralité de l'oxyde complexe ;
**caractérisée en ce que**
le matériau a une teneur en calcium présent comme impureté inférieure à 1000 ppm.

2. Batterie selon la revendication 1, **caractérisée en ce que** M représente Fe(II), seul ou partiellement remplacé par au plus 30% atomique d'un ou plusieurs autres métaux choisis parmi Mn, Ni et Co, et/ou par au plus 10% atomique d'un ou plusieurs métaux aliovalents ou isovalents choisis parmi Mg, Mo, Nb, Ti, Al, Ta, Ge, La, Y, Yb, Sm, Ce, Cu, Hf, Cr, Zr, Bi, Zn, B, Ca et W et/ou par au plus 5% atomique de Fe(III).

3. Batterie selon la revendication 1, **caractérisée en ce que** le dépôt de carbone est uniforme, adhérent et non poudreux.

4. Batterie selon la revendication 1, **caractérisée en ce que** le dépôt de carbone représente de 0,03 à 15% en poids par rapport au poids total.

5. Batterie selon la revendication 1, **caractérisée en ce que** le calcium présent comme impureté est principalement déposé à la surface du matériau C-AₓM(XO₄)_{y}.

6. Batterie selon la revendication 5, **caractérisée en ce que** le calcium présent comme impureté est principalement sous la forme d'un phosphate de calcium, comprenant du lithium.

7. Batterie selon la revendication 1, **caractérisée en ce que** le matériau C-AₓM(XO₄)_{y} est du C-LiFePO₄.

8. Batterie selon la revendication 1, **caractérisée en ce que** le matériau C-AₓM(XO₄)_{y} est constitué par des particules élémentaires et des agglomérats de particules élémentaires.

9. Batterie selon la revendication 8, **caractérisée en ce que** la dimension des particules élémentaires est comprise entre 10 nm et 3 µm et la dimension des agglomérats est comprise entre 100 nm et 30 µm.

10. Batterie selon la revendication 9, **caractérisée en ce qu'**il a une surface spécifique entre 5 m²/g et 50 m²/g.

11. Batterie selon la revendication 1, **caractérisée en ce que** le matériau C-AₓM(XO₄)_{y} est constitué par des particules élémentaires et des agglomérats de particules élémentaires, où les particules élémentaires ont une distribution de tailles de particules D₅₀ comprise entre 1 µm et 5 µm et où les agglomérats ont une distribution de tailles D₅₀ comprise entre 1 µm et 10 µm.

12. Batterie selon la revendication 1 **caractérisée en ce que** la cathode est constituée par un film de matériau composite déposé sur un substrat conducteur formant collecteur de courant, le matériau composite comprenant le matériau C-AₓM(XO₄)_{y}, un liant et un composé conducteur électronique.

13. Batterie selon la revendication 12, **caractérisée en ce que** le liant est un polymère composé au moins de 60% d'unités récurrentes -CH₂-CH₂O- dérivées de l'oxyde d'éthylène, dans lequel est dissous un sel de lithium.

14. Batterie selon la revendication 13, **caractérisée en ce que** lorsque le sel de lithium est présent, ce sel comprend LiN(SO₂CF₃)₂.

15. Procédé afin d'améliorer les propriétés électrochimiques d'une batterie de technologie lithium métal polymère (LMP), comprenant une anode, une cathode et un électrolyte polymère contenant un sel de lithium, où la cathode comprend un matériau C-AₓM(XO₄)_{y}, constitué par des particules d'un composé répondant à la formule AₓM(XO₄)_{y} où les particules comportent sur au moins une partie de leur surface un dépôt de carbone pyrolytique, **caractérisé en ce que** le procédé comprend :
(i) une détermination de la teneur en calcium présent comme impureté
(a) d'un matériau oxyanion de métal lithié ou partiellement lithié comportant des particules d'un composé répondant à la formule AₓM(XO₄)_{y},
(b) d'un matériau oxyanion de métal lithié ou partiellement lithié comportant des particules d'un composé répondant à la formule AₓM(XO₄)_{y} où les particules comportent sur au moins une partie de leur surface un dépôt de carbone pyrolytique, ou
(c) des précurseurs de (a) ou (b) ;
(ii) une sélection parmi (a), (b) ou (c) du matériau ou précurseurs contenant une teneur en calcium présent comme impureté inférieure à 1000 ppm, destiné à la fabrication de la cathode, et où :
- A représente Li, seul ou partiellement remplacé par au plus 10% atomique de Na ou K;
- M représente Fe(II), ou Mn(II), ou leurs mélanges, seul ou partiellement remplacé par au plus 30% atomique d'un ou plusieurs autres métaux choisis parmi Ni et Co, et/ou par au plus 10% atomique d'un ou plusieurs métaux aliovalents ou isovalents autres que Ni ou Co, et/ou par au plus 5% atomique de Fe(III); et
- XO₄ représente PO₄ seul ou partiellement remplacé par au plus 10% molaire d'au moins un groupe choisi parmi SO₄, SiO₄ et MoO₄; et
- 0 < x < 2 et 0 < y < 2, les coefficients x et y étant choisis indépendamment pour assurer l'électroneutralité de l'oxyde complexe.

## Patentansprüche

1. Batterie, umfassend eine metallische Lithium-Anode, eine Kathode und einen Polymerelektrolyt, der ein Lithiumsalz enthält, wobei die Kathode ein Material C-AₓM(XO₄)_{y} umfasst, ausgebildet aus Partikeln einer Verbindung der Formel AₓM(XO₄)_{y}, wobei die Partikel auf wenigstens einem Teil ihrer Oberfläche eine Ablagerung von pyrolytischem Kohlenstoff umfassen, wobei:
- A Li darstellt, nur oder teilweise durch höchstens 10 At.-% von Na oder K ersetzt;
- M Fe(ll) oder Mn(ll) oder deren Gemische darstellt, nur oder teilweise durch Folgendes ersetzt: höchstens 30 At.-% eines oder mehrerer anderer Metalle, ausgewählt aus Ni und Co, und/oder höchstens 10 At.-% eines oder mehrerer aliovalenten oder isovalenten Metalle, anderer als Ni oder Co, und/oder höchstens 5 At.-% von Fe(III); und
- XO₄ PO₄ darstellt, nur oder teilweise durch höchstens 10 Mol-% wenigstens einer Gruppe ersetzt, ausgewählt aus SO₄, SiO₄ und MoO₄; und
- 0 < x ≤ 2 und 0 < y ≤2, wobei die Koeffizienten x und y unabhängig ausgewählt sind, um die Elektroneutralität des komplexen Oxids zu sichern;
**dadurch gekennzeichnet, dass**
das Material einen Kalziumgehalt aufweist, der als eine Verunreinigung von unter 1000 ppm vorhanden ist.

2. Batterie nach Anspruch 1, **dadurch gekennzeichnet, dass** M Fe(II) darstellt, nur oder teilweise durch Folgendes ersetzt: höchstens 30 At.-% eines oder mehrerer anderer Metalle, ausgewählt aus Mn, Ni und Co, und/oder höchstens 10 At.-% eines oder mehrerer aliovalenten oder isovalenten Metalle, ausgewählt aus Mg, Mo, Nb, Ti, Al, Ta, Ge, La, Y, Yb, Sm, Ce, Cu, Hf, Cr, Zr, Bi, Zn, B, Ca und W und/oder höchstens 5 At.-% von Fe(III).

3. Batterie nach Anspruch 1, **dadurch gekennzeichnet, dass** die Ablagerung von Kohlenstoff gleichmäßig, haftend und nicht pulverförmig ist.

4. Batterie nach Anspruch 1, **dadurch gekennzeichnet, dass** die Ablagerung von Kohlenstoff 0,03 bis 15 Gew.-% bezüglich des Gesamtgewichtes darstellt.

5. Batterie nach Anspruch 1, **dadurch gekennzeichnet, dass** das als Verunreinigung vorhandene Kalzium im Wesentlichen auf der Oberfläche des Materials C-AₓM(XO₄)_{y} abgeschieden ist.

6. Batterie nach Anspruch 5, **dadurch gekennzeichnet, dass** das als Verunreinigung vorhandene Kalzium im Wesentlichen in Form eines Kalziumphosphats, Lithium umfassend, vorliegt.

7. Batterie nach Anspruch 1, **dadurch gekennzeichnet, dass** das Material C-AₓM(XO₄)_{y} von C-LiFePO₄ ist.

8. Batterie nach Anspruch 1, **dadurch gekennzeichnet, dass** das Material C-AₓM(XO₄)_{y} aus Elementarteilchen und Elementarteilchenagglomeraten ausgebildet ist.

9. Batterie nach Anspruch 8, **dadurch gekennzeichnet, dass** die Größe der Elementarteilchen zwischen 10 nm und 3 µm liegt und die Größe der Agglomerate zwischen 100 nm und 30 µm liegt.

10. Batterie nach Anspruch 9, **dadurch gekennzeichnet, dass** sie eine spezielle Oberfläche zwischen 5 m²/g und 50 m²/g aufweist.

11. Batterie nach Anspruch 1, **dadurch gekennzeichnet, dass** das Material C-AₓM(XO₄)_{y} aus Elementarteilchen und Elementarteilchenagglomeraten ausgebildet ist, oder die Elementarteilchen eine Partikelgrößenverteilung D₅₀ zwischen 1 µm und 5 µm aufweisen und die Agglomerate eine Größenverteilung D₅₀ zwischen 1 µm und 10 µm aufweisen.

12. Batterie nach Anspruch 1, **dadurch gekennzeichnet, dass** die Kathode durch eine Verbundmaterialschicht, die auf einem Leitersubstrat abgeschieden ist, einen Stromabnehmer bildend, ausgebildet ist, wobei das Verbundmaterial das Material C-AₓM(XO₄)_{y} ein Bindemittel und eine Elektronenleiterverbindung umfasst.

13. Batterie nach Anspruch 12, **dadurch gekennzeichnet, dass** das Bindemittel ein Polymer ist, zusammengesetzt aus wenigstens 60 % Wiederholungseinheiten von -CH₂-CH₂O-abgeleitet von Ethylenoxid, in denen ein Lithiumsalz gelöst ist.

14. Batterie nach Anspruch 13, **dadurch gekennzeichnet, dass**, wenn das Lithiumsalz vorhanden ist, dieses Salz LiN(SO₂CF₃)₂ umfasst.

15. Verfahren zum Verbessern der elektrochemischen Eigenschaften einer Batterie mit Lithium-Metall-Polymer(*lithium-métal-polyèmere*-LMP-)Technologie, eine Anode, eine Kathode und ein Polymerelektrolyt, ein Lithiumsalz enthaltend, umfassend, wobei die Kathode ein Material C-AₓM(XO₄)_{y} umfasst, ausgebildet aus Partikeln einer Verbindung der Formel AₓM(XO₄)_{y}, wobei die Partikel auf wenigstens einem Teil ihrer Oberfläche eine Ablagerung von pyrolytischem Kohlenstoff umfassen, **dadurch gekennzeichnet, dass** das Verfahren Folgendes umfasst:
(i) Bestimmung des Kalziumgehaltes, der als Verunreinigung von Folgendem vorhanden ist:
(a) einem Oxyanion-Material von lithiumhaltigen oder teilweise lithiumhaltigen Metall, Partikel einer Verbindung der Formel AₓM(XO₄)_{y} umfassend,
(b) einem Oxyanion-Material von lithiumhaltigen oder teilweise lithiumhaltigen Metall, Partikel einer Verbindung der Formel AₓM(XO₄)_{y} umfassend, wobei die Partikel wenigstens auf einem Teil ihrer Oberfläche eine Ablagerung von pyrolytischem Kohlenstoff umfassen, oder
(c) Vorläufern von (a) oder (b);
(ii) Auswahl aus (a), (b) oder (c) des Materials oder der Vorläufer, die einen Kalziumgehalt, der als Verunreinigung von unter 1000 ppm vorhanden ist, für die Herstellung der Kathode bestimmt, umfassen und wobei:
- A Li darstellt, nur oder teilweise durch höchstens 10 At.-% von Na oder K ersetzt;
- M Fe(II) oder Mn(II) oder deren Gemische darstellt, nur oder teilweise durch Folgendes ersetzt: höchstens 30 At.-% eines oder mehrerer anderer Metalle, ausgewählt aus Ni und Co, und/oder höchstens 10 At.-% eines oder mehrerer aliovalenten oder isovalenten Metalle, anderer als Ni oder Co, und/oder höchstens 5 At.-% von Fe(III); und
- XO₄ PO₄ darstellt, nur oder teilweise durch höchstens 10 Mol-% wenigstens einer Gruppe ersetzt, ausgewählt aus SO₄, SiO₄ und MoO₄; und
- 0 < x < 2 und 0 < y <2, wobei die Koeffizienten x und y unabhängig ausgewählt sind, um die Elektroneutralität des komplexen Oxids zu sichern.

## Claims

1. Battery comprising a lithium metal anode, a cathode and a polymer electrolyte which contains a lithium salt, the cathode of which battery comprises a C-AₓM(XO₄)_{y} material consisting of particles of a compound of formula AₓM(XO₄)_{y}, the particles comprising a pyrolytic carbon deposit on at least part of the surface thereof, where:
- A represents Li, alone or partially substituted with at most 10 at.% of Na or K;
- M represents Fe(ll) or Mn(ll) or mixtures thereof, alone or partially substituted with at most 30 at.% of one or more other metals selected from Ni and Co, and/or with at most 10 at.% of one or more aliovalent or isovalent metals other than Ni or Co, and/or with at most 5 at.% of Fe(III); and
- XO₄ represents PO₄, alone or partially substituted with at most 10 mol.% of at least one group selected from SO₄, SiO₄ and MoO₄; and
- 0 < x ≤ 2 and 0 < y ≤ 2, coefficients x and y being selected independently in order to ensure electroneutrality of the complex oxide;
**characterized in that** the material has a content of calcium present as an impurity of less than 1000 ppm.

2. Battery according to claim 1, **characterized in that** M represents Fe(II), alone or partially substituted with at most 30 at.% of one or more other metals selected from Mn, Ni and Co, and/or with at most 10 at.% of one or more aliovalent or isovalent metals selected from Mg, Mo, Nb, Ti, Al, Ta, Ge, La, Y, Yb, Sm, Ce, Cu, Hf, Cr, Zr, Bi, Zn, B, Ca and W and/or with at most 5 at.% of Fe(III).

3. Battery according to claim 1, **characterized in that** the carbon deposit is uniform, is adhesive and is not a powder.

4. Battery according to claim 1, **characterized in that** the carbon deposit constitutes from 0.03 to 15 wt.% of the total weight.

5. Battery according to claim 1, **characterized in that** the calcium present as an impurity is predominantly deposited on the surface of the C-AₓM(XO₄)_{y} material.

6. Battery according to claim 5, **characterized in that** the calcium present as an impurity is predominantly in the form of a calcium phosphate comprising lithium.

7. Battery according to claim 1, **characterized in that** the C-AₓM(XO₄)_{y} material is C-LiFePO₄.

8. Battery according to claim 1, **characterized in that** the C-AₓM(XO₄)_{y} material consists of elementary particles and agglomerates of elementary particles.

9. Battery according to claim 8, **characterized in that** the elementary particles measure between 10 nm and 3 µm and the agglomerates measure between 100 nm and 30 µm.

10. Battery according to claim 9, **characterized in that** it has a specific surface area of between 5 m²/g and 50 m²/g.

11. Battery according to claim 1, **characterized in that** the C-AₓM(XO₄)_{y} material consists of elementary particles and agglomerates of elementary particles, the elementary particles having a particle size distribution D₅₀ of between 1 µm and 5 µm, and the agglomerates having a size distribution D₅₀ of between 1 µm and 10 µm.

12. Battery according to claim 1, **characterized in that** the cathode consists of a composite material film deposited on a conductive substrate which forms a current collector, the composite material comprising the C-AₓM(XO₄)_{y} material, a binder and an electrically conductive compound.

13. Battery according to claim 12, **characterized in that** the binder is a polymer which is composed of at least 60% of repeating -CH₂-CH₂O- units derived from ethylene oxide, and in which a lithium salt is dissolved.

14. Battery according to claim 13, **characterized in that** when the lithium salt is present said salt comprises LiN(SO₂CF₃)₂.

15. Method for improving the electrochemical properties of a battery of lithium-metal-polymer technology (LMP) comprising an anode, a cathode and a polymer electrolyte which contains a lithium salt, the cathode comprising a C-AₓM(XO₄)_{y} material consisting of particles of a compound of formula AₓM(XO₄)_{y}, the particles comprising a pyrolytic carbon deposit on at least part of the surface thereof, **characterized in that** the method comprises:
(i) determining the content of calcium present as an impurity
(a) in an oxyanion material of lithiated or partially lithiated metal comprising particles of a compound of formula AₓM(XO₄)_{y},
(b) in an oxyanion material of lithiated or partially lithiated metal comprising particles of a compound of formula AₓM(XO₄)_{y}, the particles comprising a pyrolytic carbon deposit on at least part of the surface thereof,
(c) in precursors of (a) or (b);
(ii) selecting from (a), (b) or (c) the material or precursors which have a content of calcium present as an impurity of less than 1000 ppm for producing the cathode, where:
- A represents Li, alone or partially substituted with at most 10 at.% of Na or K;
- M represents Fe(ll) or Mn(ll) or mixtures thereof, alone or partially substituted with at most 30 at.% of one or more other metals selected from Ni and Co, and/or with at most 10 at.% of one or more aliovalent or isovalent metals other than Ni or Co, and/or with at most 5 at.% of Fe(III); and
- XO₄ represents PO₄, alone or partially substituted with at most 10 mol.% of at least one group selected from SO₄, SiO₄ and MoO₄; and
- 0 < x ≤ 2 and 0 < y ≤ 2, coefficients x and y being selected independently in order to ensure electroneutrality of the complex oxide.
